# EUROPEAN PATENT SPECIFICATION

(11) **EP 1 784 086 B1**
(45) Date of publication and mention of the grant of the patent: **16.01.2008**
(21) Application number: 05784138.9
(22) Date of filing: 07.09.2005
(51) Int. Cl.: A23L 1/00

(54) **EDIBLE FOOD CONTAINER AND METHOD OF MAKING SAME**
ESSBARE VERPACKUNG FÜR LEBENSMITTEL UND VERFAHREN ZU DEREN HERSTELLUNG
CONTENANT ALIMENTAIRE COMESTIBLE ET SON PROCEDE DE FABRICATION

(30) Priority: 07.09.2004 IT VI20040210
(43) Date of publication of application: 16.05.2007
(73) Proprietor: Vicentini, Tiziano, 38061 Pilcante di Ala (IT)
(72) Inventor: Vicentini, Tiziano, 38061 Pilcante di Ala (IT)
(74) Representative: Vannini, Mario
(86) International application number: PCT/IB2005/002649
(87) International publication number: WO 2006/027666

(56) References cited:
- EP-A- 0 752 209
- EP-A- 1 053 682
- US-A- 1 936 835
- US-A- 2 508 724
- US-A- 4 855 150
- US-A- 5 002 783
- US-A- 5 045 329
- US-B1- 6 224 920

## Description

### Field of the Invention

This invention generally finds application in the field of food and catering and particularly relates to an edible food container as defined in the preamble of claim 1, and to a method of making same.

### State of the Art

Many edible containers are known in the art, which have different shapes to support and contain food of various types and consistencies.

For instance, EP-A-1044613, GB-A-327322, US-A-2508724, US-A-5916611 disclose respective tray or cup-shaped food containers having a conical, frustoconical or cylindrical food containing sidewall, for easily containing low consistency food, such as ice-cream and similar products. The container is made by hot molding or folding and baking an appropriately sized batter sheet, obtained from a flour-based dough.

In these prior art solutions, a flat support base is not always provided and when it is, the sidewall generally has a considerable extension when compared to the flat base. This aspect makes the container suitable to contain and allow consumption of low consistency products, such as ice-cream, but does not easily allow consumption of other solid foodstuffs. The cup shape allows to consume food by using a spoon or directly placing the lips on the sidewall edge, but hinders the use of a fork and a knife to cut and eat solid products.

Furthermore, in this type of containers, portions of the container may be only removed and eaten by directly biting such portions with the teeth. When trying to remove a portion of the container by the hands or with knife and fork, the container may get broken in an undesired area, thereby possibly causing accidental food spills and making the operation more difficult.

EP-A-1219185, EP-A-752209, US-A-4065581 disclose edible food containers having a substantially flat bottom wall for resting on a generally flat surface and a raised peripheral edge to prevent any accidental food spill. These containers are obtained by molding and baking a continuous sheet of batter.

These solutions allow to easily consume the food contained therein with knife and fork, with the flat wall lying, for instance, on a table, or holding the container in one's hands and biting into a portion of the food and a portion of the container. Nevertheless, the removal of a portion of the container with the hands or with knife and fork may be not easy, as the container may get broken in undesired areas, with the risks mentioned above. This difficulty is further increased by the fact that the bottom wall and the sidewall of the container are subjected to the same processing steps and- have substantially the same strength and-flexibility properties in the finished container. Therefore, when one portion only of the sidewall is to be removed, there is the risk that the bottom wall also gets broken, because the forces required for breaking are similar for both walls.

US-A-5 045 329 discloses a pita bread having a central portion and at least one peripheral portion, wherein both portions are made of the same edible material and wherein the peripheral portion has one or more removable areas with a differential mechanical strength to facilitate separation and removal of such one or more removable areas by a user. This known product cannot be used as a container and additionally cannot avoid the risk of breakage of one of the removable areas or of the central one upon separation thereof.

### Summary of the invention

A primary object of this invention is to obviate the above drawbacks, by providing an edible food container which is easy to eat with the food contained therein.

A particular object is to provide a functional and practical container, to be used both when the user is standing and holds it in his/her hands or on a table, using knife and a fork.

A further object of this invention is to provide a container that has a pleasing aspect.

Another particular object is to provide a fast and cost-effective method for making the container.

These objects, as well as other objects that will be more apparent hereafter, are achieved, according to claim 1, by an edible food container comprising a main body having a central portion for supporting food, at least one peripheral portion extending therefrom for laterally containing food, both the central portion and the peripheral portion being made of the same edible material, characterized in that the peripheral portion has one or more removable areas having a different mechanical strength from the central portion to facilitate separation and removal of such one or more removable areas by a user.

Thanks to this particular arrangement, a convenient and pleasant edible container may be obtained.

### Brief Description of the Drawings

Further features and advantages of the invention will be more apparent from the detailed description of a few preferred, non-exclusive embodiments of an edible container according to the invention, which are described by way of non-limiting examples with the help of the annexed drawings, in which:
FIG. 1 is a top view of a first embodiment of a container according to the invention;
FIG. 2 is a top view of a second embodiment of a container according to the invention.

### Detailed description of a preferred embodiment

Particularly referring to the above figures, an edible food container according to the invention is described, which is generally designated with numeral 1. The container 1 comprises a main body 2 having a central portion 3 for supporting food, at least one peripheral portion 4 for laterally containing the food and extending from the central portion 3.

The central portion 3 and the peripheral portion 4 are both made of the same edible material. The body 2 may have a substantially sheet-like structure or have localized thickened areas (not shown) to locally increase stiffness. Furthermore, the central portion 3 may have a concave or substantially flat shape and the peripheral portion 4 may be upwardly folded to a small extent with respect to the lying plane of the central portion 3.

The container 1 may have various plan shapes and preferably the central portion 3 may be circular and the peripheral portion 4 may be substantially annular. More in detail, the container 1 may have an overall diameter D of 22 cm to 26 cm, and the peripheral portion 4 may have a width L of 2 cm and 4 cm, preferably of 3 cm.

A peculiar feature of the invention consists in that the peripheral portion 4 has one or more removable areas 5 having a differential mechanical strength with respect to the central portion 3. This will facilitate the separation and removal of these one or more removable areas by a user.

The removable areas 5 may be differentiated from the central portion by a different density. Particularly, the central portion 3 may have a higher density than the removable areas 5 of the peripheral portion 4. As an alternative on in addition to differentiated density, the removable areas 5 may have different thicknesses from the central portion 3 to facilitate removal thereof. In certain embodiments, the peripheral portion 4 may have a greater average thickness than the central portion 3.

As shown in the accompanying drawings, the body 2 may have at least one tear-off line at the connecting edge between the central portion 3 and one or more removable areas 5. This tear-off line 6 may have a substantially circular shape and extend continuously through an angle of 360°.

Conveniently, the peripheral portion 4 may have further tear-off lines 6', possibly with different shapes and orientations.

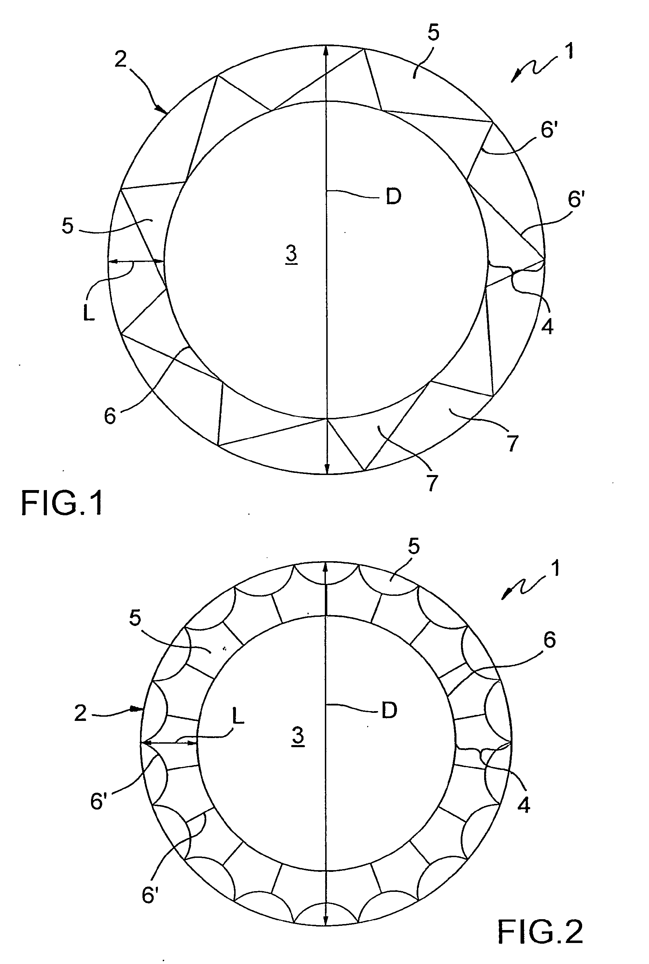

Particularly, these further tear-off lines 6' may extend radially and/or along circular arcs, as shown in FIG. 2, or define various polygonal shapes 7. As shown in FIG. 1, the polygonal figures 7 may substantially have the shape of scalene triangles.

To facilitate the food containing action and prevent food from leaking from the upper face to the lower face of the central portion 3, the latter may be suitably treated to be substantially liquid-impervious. Particularly, the central portion 3 may be made substantially liquid-impervious by application of suitable pressure and temperature combinations during the fabrication process or by application of a substantially liquid-impervious layer (not shown) to the upper face.

The container 1 as described hereinbefore may be fabricated by a method comprising the following steps.

In a first step a), a dough of an edible product is prepared, which may contain several different ingredients and particularly have cereal or plant fruit flour as basic component.

In a second step b) a predetermined amount of dough is rolled out to form at least one substantially sheet-like disk, for making one container 1. The predetermined amount of dough may be selected to make a single sheet-like disk or a plurality of sheet-like disks, e.g. cut from a substantially flat web. Also, the steps described below with reference to a single sheet-like disk may be implemented on one disk at a time or simultaneously on a plurality of sheet-like disks, which can make the method faster and more cost-effective.

Then, in a step c), the disk is shaped at least once to obtain a semifinished product.

This shaping step c) defines a central portion 3 and a peripheral portion 4 disposed at the periphery of the central portion 3. One or more removable areas 5, having a differential mechanical strength with respect to that of the central portion 3, are further provided. This will facilitate the separation and removal of these one or more removable areas 5 by a user.

The method of the invention further provides, in a step d), cooking of the semifinished product at least once. The appropriate selection of the dough components and of the kind of cooking thereof will provide a container 1 with various consistency and toughness properties. More in detail, the container 1 may be relatively soft like a "piadina" (typical Italian bake-stone bread) or relatively tough like a pizza.

The shaping step c) may include at least one pressing operation, which is only carried out at the central portion 3, for the latter to have different mechanical properties from the peripheral portion 4.

The shaping and pressing step c) and the cooking step d) may be carried out at different times or simultaneously, as described in greater detail below.

In a first embodiment, the pressing operation may be performed before cooking. In this case, after cooling, further pressing may be carried out at the central portion only.

In a second embodiment, partial cooking may be followed by pressing. Cooking of the semifinished product may be completed after pressing.

In a third embodiment, pressing may be performed at the same time as cooking. Particularly, cooking may occur by contact heating of the central portion 3 against heated platens (not shown) and by air heating of the peripheral portion 4.

From the above disclosure, the container of the invention proves to fulfill the proposed objects and is particularly convenient and practical to use, as well as cost effective.

## Claims

1. An edible food container comprising a main body (2) having a central portion (3) for supporting food, at least one peripheral portion (4) for lateral food containment extending therefrom, said central portion (3) and said peripheral portion (4) being both made of the same edible material, wherein said peripheral portion (4) has one or more removable areas (5) with a differential mechanical strength to facilitate separation and removal of such one or more removable areas (5) by a user, **characterized in that** said one or more removable areas (5) have different densities with respect to that of said central portion (3).

2. A container as claimed in claim 1, **characterized in that** said central portion (3) has a higher density than said one or more removable areas (5).

3. A container as claimed in claim 1, **characterized in that** said one or more removable areas (5) have different thicknesses from said central portion (3).

4. A container as claimed in claim 1, **characterized in that** said body (2) has at least one tear-off line (6) at the connecting edge between said central portion (3) and said one or more removable areas (5).

5. A container as claimed in claim 4, **characterized in that** said central portion (3) has a substantially flat and circular shape and said peripheral portion (4) has a substantially annular shape.

6. A container as claimed in claim 4, **characterized in that** said peripheral portion (4) has further tear-off lines (6').

7. A container as claimed in claim 6, **characterized in that** said further tear-off lines (6') extend radially.

8. A container as claimed in claim 6, **characterized in that** said further tear-off lines (6') extend along circular arcs.

9. A container as claimed in claim 6, **characterized in that** said further tear-off lines (6') define polygonal figures (7).

10. A container as claimed in claim 9, **characterized in that** said polygonal figures (7) are triangles.

11. A container as claimed in claim 3, **characterized in that** said peripheral portion (4) has a greater average thickness than said central portion (3).

12. A container as claimed in one or more of the preceding claims, **characterized in that** said central portion (3) has a substantially liquid-impervious layer on an upper-face.

13. A method of making an edible food container as claimed in one or more of the preceding claims including the steps of:
a) preparing a dough of an edible product;
b) rolling out a predetermined amount of said dough and forming at least one sheet-like disk;
c) shaping said disk at least once to obtain a semifinished product having a central portion (3) and a peripheral portion (4), disposed at the periphery of said central portion (3), one or more removable areas (5) being provided, which have a differential mechanical strength with respect to that of said central portion (3), to facilitate separation and removal of said removable areas (5) by a user;
d) cooking said semifinished product at least once;
**characterized in that** said one or more removable areas (5) are so shaped to have different densities with respect to that of said central portion (3).

14. A method as claimed in claim 13, **characterized in that** said shaping step c) includes at least one pressing operation, which is only carried out at said central portion (3), before said at least one cooking step d).

15. A method as claimed in claim 14, **characterized in that** it includes a further pressing operation, which is only carried out at said central portion (3), after said cooking step d).

16. A method as claimed in claim 13, **characterized in that** said shaping step c) includes at least one pressing operation, which is only carried out at said central portion (3), after said at least one cooking step d), the latter being a partial cooking step.

17. A method as claimed in claim 16, **characterized in that** it includes completed cooking of said semifinished product, after said pressing operation.

18. A method as claimed in claim 14, **characterized in that** said at least one pressing operation is performed at the same time as said at least one cooking step d).

19. A method as claimed in claim 18, **characterized in that** said cooking step d) includes contact heating of said central portion (3) against heated platens and air heating of said peripheral portion (4).

## Patentansprüche

1. Essbare Verpackung für Lebensmittel mit einem Hauptgehäuse (2) mit einem zentralen Bereich (3) zum Halten des Lebensmittels, mindestens einem äußeren Bereich (4) zur seitlichen Eingrenzung von sich daraus erstreckendem Lebensmittel, wobei der zentrale Bereich (3) und der äußere Bereich (4) beide aus dem selben essbaren Material hergestellt sind und der äußere Bereich (4) einen oder mehrere entfernbare Flächen (5) aufweist mit einer anderen mechanischen Festigkeit um Trennung und Entfernung solcher einer oder mehreren entfernbaren Flächen (5) durch einen Nutzer zu erleichtern, **dadurch gekennzeichnet, dass** die einen oder mehreren entfernbaren Flächen (5) unterschiedliche Dichten aufweisen als die des zentralen Bereichs (3).

2. Verpackung gemäß Anspruch 1, **dadurch gekennzeichnet, dass** der zentrale Bereich (3) eine höhere Dichte aufweist als die eine oder mehreren entfernbaren Flächen (5).

3. Verpackung gemäß Anspruch 1, **dadurch gekennzeichnet, dass** die einen oder mehreren entfernbaren Flächen (5) andere Dicken aufweisen als der zentrale Bereich (3).

4. Verpackung gemäß Anspruch 1, **dadurch gekennzeichnet, dass** das Gehäuse (2) mindestens eine Abrisslinie (6) an der verbindenden Kante zwischen dem zentralen Bereich (3) und den einen oder mehreren entfernbaren Flächen (5) aufweist.

5. Verpackung gemäß Anspruch 4, **dadurch gekennzeichnet, dass** der zentrale Bereich (3) eine im wesentlichen flache und kreisförmige Form hat und der äußere Bereich (4) eine im wesentlichen ringförmige Form hat.

6. Verpackung gemäß Anspruch 4, **dadurch gekennzeichnet, dass** der äußere Bereich (4) weitere Abrisslinien (6') aufweist.

7. Verpackung gemäß Anspruch 6, **dadurch gekennzeichnet, dass** die weiteren Abrisslinien (6') sich radial erstrecken.

8. Verpackung gemäß Anspruch 6, **dadurch gekennzeichnet, dass** die weiteren Abrisslinien (6') sich entlang kreisförmiger Bögen erstrecken.

9. Verpackung gemäß Anspruch 6, **dadurch gekennzeichnet, dass** die weiteren Abrisslinien (6') polygonale Figuren (7) bilden.

10. Verpackung gemäß Anspruch 9, **dadurch gekennzeichnet, dass** die polygonalen Figuren (7) Dreiecke sind.

11. Verpackung gemäß Anspruch 3, **dadurch gekennzeichnet, dass** der äußere Bereich (4) eine größere durchschnittliche Dicke aufweist als der zentrale Bereich (3).

12. Verpackung gemäß einem oder mehrerer der vorhergehenden Ansprüche, **dadurch gekennzeichnet, dass** der zentrale Bereich (3) eine im wesentlichen flüssigkeitsdichte Schicht auf einer oberen Seite aufweist.

13. Verfahren zur Herstellung einer essbaren Verpackung für Lebensmittel gemäß einem oder mehrerer der vorhergehenden Ansprüche mit den Schritten:
a) Zubereiten eines Teigs aus einem essbaren Erzeugnis,
b) Ausrollen einer vorbestimmten Menge dieses Teigs und Bilden von mindestens einer blattartigen Scheibe,
c) Formen dieser Scheibe mindestens einmal, um ein halbfertiges Erzeugnis zu erhalten mit einem zentralen Bereich (3) und einem äußeren Bereich (4), der an der Peripherie des zentralen Bereichs (3) angeordnet ist, wobei eine oder mehrere entfernbare Flächen (5) vorgesehen sind, die eine andere mechanische Festigkeit aufweisen als die des zentralen Bereichs (3), um Trennung und Entfernung solcher entfernbarer Flächen (5) durch einen Nutzer zu erleichtern,
d) Kochen des halbfertigen Erzeugnisses mindestens einmal,
**dadurch gekennzeichnet, dass** die eine oder mehreren entfernbaren Flächen (5) so geformt sind, dass sie andere Dichten aufweisen als die des zentralen Bereichs (3).

14. Verfahren gemäß Anspruch 13, **dadurch gekennzeichnet, dass** der Schritt des Formens c) mindestens einen Vorgang des Drückens umfasst, der nur durchgeführt wird an dem zentralen Bereich (3) vor dem mindestens einen Schritt des Kochens d).

15. Verfahren gemäß Anspruch 14, **dadurch gekennzeichnet, dass** ein weiterer Vorgang des Drückens umfasst ist, der nur durchgeführt wird an dem zentralen Bereich (3) nach dem Schritt des Kochens d).

16. Verfahren gemäß Anspruch 13, **dadurch gekennzeichnet, dass** der Schritt des Formens c) mindestens einen Vorgang des Drückens umfasst, der nur durchgeführt wird an dem zentralen Bereich (3) nach dem mindestens einen Schritt des Kochens d), wobei der Letztere ein teilweiser Schritt des Kochens ist.

17. Verfahren gemäß Anspruch 16, **dadurch gekennzeichnet, dass** vollständiges Kochen des halbfertigen Erzeugnisses vorgesehen ist nach dem Vorgang des Drückens.

18. Verfahren gemäß Anspruch 14, **dadurch gekennzeichnet, dass** der mindestens eine Vorgang des Drückens zur selben Zeit durchgeführt wird wie der mindestens eine Schritt des Kochens d).

19. Verfahren gemäß Anspruch 18, **dadurch gekennzeichnet, dass** der Schritt des Kochens d) Erwärmen des zentralen Bereichs (3) durch Anlage an erwärmte Platten umfasst und Lufterwärmung des äußeren Bereichs (4).

## Revendications

1. Contenant alimentaire comestible comprenant un corps principal (2) ayant une partie centrale (3) servant à supporter un produit alimentaire, au moins une partie périphérique (4) qui s'étend de cette dernière pour retenir latéralement le produit alimentaire, ladite partie centrale (3) et ladite partie périphérique (4) étant toutes les deux constituées du même matériau comestible, où ladite partie périphérique (4) a une ou plusieurs régions amovibles (5) ayant une résistance mécanique différentielle pour faciliter la séparation et le retrait de la ou des régions amovibles (5) par un utilisateur, **caractérisé en ce que** la ou lesdites régions amovibles (5) ont des masses volumiques différentes de celle de ladite partie centrale (3).

2. Contenant selon la revendication 1, **caractérisé en ce que** ladite partie centrale (3) a une masse volumique supérieure à celle de la ou desdites régions amovibles (5).

3. Contenant selon la revendication 1, **caractérisé en ce que** la ou lesdites régions amovibles (5) ont des épaisseurs différentes de celle de ladite partie centrale (3).

4. Contenant selon la revendication 1, **caractérisé en ce que** ledit corps (2) a au moins une ligne de détachement (6) au niveau du bord de raccordement entre ladite partie centrale (3) et la ou lesdites régions amovibles (5).

5. Contenant selon la revendication 4, **caractérisé en ce que** ladite partie centrale (3) a une forme essentiellement plate et circulaire, et ladite partie périphérique (4) a une forme essentiellement annulaire.

6. Contenant selon la revendication 4, **caractérisé en ce que** ladite partie périphérique (4) a des lignes de détachement supplémentaires (6').

7. Contenant selon la revendication 6, **caractérisé en ce que** lesdites lignes de détachement supplémentaires (6') s'étendent dans la direction radiale.

8. Contenant selon la revendication 6, **caractérisé en ce que** lesdites lignes de détachement supplémentaires (6') s'étendent le long d'arcs circulaires.

9. Contenant selon la revendication 6, **caractérisé en ce que** lesdites lignes de détachement supplémentaires (6') définissent des figures polygonales (7).

10. Contenant selon la revendication 9, **caractérisé en ce que** lesdites figures polygonales (7) sont des triangles.

11. Contenant selon la revendication 3, **caractérisé en ce que** ladite partie périphérique (4) a une épaisseur moyenne supérieure à celle de ladite partie centrale (3).

12. Contenant selon une ou plusieurs des revendications précédentes, **caractérisé en ce que** ladite partie centrale (3) a une couche essentiellement imperméable aux liquides sur une face supérieure.

13. Procédé de fabrication d'un contenant alimentaire comestible selon une ou plusieurs des revendications précédentes, comprenant les étapes qui consistent à :
a) préparer une pâte d'un produit comestible ;
b) étendre une quantité prédéterminée de ladite pâte et former au moins un disque en forme de feuille;
c) façonner ledit disque au moins une fois pour obtenir un produit semi-fini ayant une partie centrale (3) et une partie périphérique (4), disposée à la périphérie de ladite partie centrale (3), une ou plusieurs régions amovibles (5) étant prévues, qui ont une résistance mécanique différente de celle de ladite partie centrale (3), de façon à faciliter la séparation et le retrait desdites régions amovibles (5) par un utilisateur ;
d) cuire ledit produit semi-fini au moins une fois ;
**caractérisé en ce que** la ou lesdites régions amovibles (5) sont façonnées de façon à avoir des masses volumiques différentes de celle de ladite partie centrale (3).

14. Procédé selon la revendication 13, **caractérisé en ce que** ladite étape de façonnage c) comprend au moins une opération de pressage, qui est effectuée uniquement au niveau de ladite partie centrale (3), avant ladite au moins une étape de cuisson d).

15. Procédé selon la revendication 14, **caractérisé en ce qu'**il comprend une opération de pressage supplémentaire, qui est effectuée uniquement au niveau de ladite partie centrale (3), après ladite étape de cuisson d).

16. Procédé selon la revendication 13, **caractérisé en ce que** ladite étape de façonnage c) comprend au moins une opération de pressage, qui est effectuée uniquement au niveau de ladite partie centrale (3), après ladite au moins une étape de cuisson d), cette dernière étant une étape de cuisson partielle.

17. Procédé selon la revendication 16, **caractérisé en ce qu'**il comprend une cuisson complète dudit produit semi-fini, après ladite opération de pressage.

18. Procédé selon la revendication 14, **caractérisé en ce que** ladite au moins une opération de pressage est effectuée en même temps que ladite au moins une étape de cuisson d).

19. Procédé selon la revendication 18, **caractérisé en ce que** ladite étape de cuisson d) comprend un chauffage par contact de ladite partie centrale (3) contre des platines chauffées et un chauffage à l'air de ladite partie périphérique (4).
